# EUROPEAN PATENT APPLICATION

(11) **EP 4 647 591 A1**
(43) Date of publication of application: **12.11.2025**
(21) Application number: 25169013.7
(22) Date of filing: 08.04.2025
(51) Int. Cl.: F02C 3/22, B64D 37/30, F02C 7/224

(54) **AIRCRAFT FUEL SYSTEM AND METHOD**

(30) Priority: 08.05.2024 GB 202406417
(71) Applicant: Rolls-Royce plc, London N1 9FX (GB)
(72) Inventor: Palmer, Chloe Jo, Derby, DE24 8BJ (GB); Aly, Mohamed, Derby, DE24 8BJ (GB)
(74) Representative: Rolls-Royce plc

(57) **Abstract**

A fuel system (205) for an aircraft propulsion system (103) comprises a fuel tank (104) configured to store compressed gaseous hydrogen, a tank heating system (224, 232, 234, 242, 302, 406) configured to raise the temperature of hydrogen fuel within the hydrogen tank (104), a main fuel conduit (220) configured to provide hydrogen fuel from the tank (104) to a combustor (206) of a gas turbine engine (201) of the aircraft propulsion system (103) and a controller configured to control the tank heating system (224, 232, 234, 242, 302, 406). The controller (246) is configured to heat the hydrogen within the hydrogen tank (104) such that a pressure within the tank (104) during operation is maintained between a maximum pressure limit, and a minimum pressure required for operation of the gas turbine engine (201) at a maximum power without a requirement for a pump.

## Description

### TECHNICAL FIELD

This disclosure relates to fuel systems and methods of operation for hydrogen-fuelled aero gas turbine engines. The disclosure also relates to aircraft propulsion systems incorporating such fuel systems, and aircraft incorporating such propulsion systems.

### BACKGROUND

In order to limit emissions of carbon dioxide, use of hydrogen as an alternative to hydrocarbon fuel in gas turbine engines has historically only been practical in land-based installations. However, more recently there has been interest in aircraft powered by hydrogen stored at cryogenic temperatures.

Efficient storage and use of hydrogen fuel is difficult in view of its low density. Options for storage include liquid and compressed hydrogen. However, stored liquid hydrogen must be increased in temperature and pressure prior to delivery to an aircraft engine for combustion, which requires expenditure of significant energy. On the other hand, compressed gaseous or supercritical hydrogen tanks require high pressures to obtain the necessary fuel density, which results in heavy tanks. Controlling the temperature and pressure within such tanks is also problematic.

### SUMMARY

In a first aspect there is provided:
a fuel system for an aircraft propulsion system comprising:
a fuel tank configured to store compressed gaseous hydrogen;
a tank heating system configured to raise the temperature of hydrogen fuel within the hydrogen tank;
a main fuel conduit configured to provide hydrogen fuel from the tank to a combustor of a gas turbine engine of the aircraft propulsion system; and
a controller configured to control the tank heating system; wherein
the controller is configured to heat the hydrogen within the hydrogen tank such that a pressure within the tank during operation is maintained between a maximum pressure limit, and a minimum pressure required for operation of the gas turbine engine at a maximum power without a requirement for a fuel pump.

Advantageously, by controlling the tank heating system to maintain pressure within the tank between the specified values, full thrust control can be assured during operation, in a fuel system free of further pumping equipment, and without risking pressure.

The fuel system may be configured such that, in use, a maximum fuel pressure within the fuel system is provided at an outlet of the fuel tank. Consequently, no further pumps may be required within the fuel system.

The controller may be configured to control the pressure within the tank such that an outlet pressure of the tank is greater than a maximum compressor delivery pressure (P30) of the gas turbine engine at maximum take-off thrust. Advantageously, fuel can be delivered to the engine at a pressure greater than the maximum compressor pressure. Accordingly, a positive pressure gradient from the tank to the combustor is maintained under all flight conditions.

The controller may be configured to control the pressure within the tank such that an outlet pressure of the tank is a factor of at least 1.2 times the maximum compressor delivery pressure (P30), and preferably a factor of at least 1.6 times the maximum compressor delivery pressure, and more preferably a factor of at least 1.7 times the maximum compressor delivery pressure, and still more preferably a factor of 1.75 times the maximum compressor delivery pressure. The controller may be configured to configured to control the pressure within the tank such that an outlet pressure of the tank is a factor of less than 2 times the maximum compressor delivery pressure.

The fuel system may comprise a throttle valve configured to control pressure in the main fuel conduit downstream in hydrogen fuel flow of the main hydrogen tank, and upstream of the combustor of the gas turbine engine.

The tank heating system may comprise one or more of a gas turbine engine secondary fluid heat-exchanger, a recuperator, an electric heater, a gas turbine engine compressor bleed-air powered heater, and an auxiliary combustor.

The tank heating system may comprise a recuperator configured to exchange heat between exhaust gases at an outlet of the gas turbine engine, and hydrogen fuel in the fuel tank. The fuel system may comprise a secondary heat exchange fluid configured to exchange heat between the recuperator and hydrogen fuel in the fuel tank. The fuel system may comprise a flow controller configured to control mass flow rate of the secondary heat exchange fluid to control heat input from the recuperator to the hydrogen fuel.

Alternatively or in addition, the tank heating system may comprise a heat exchanger configured to exchange heat between a secondary fluid of the gas turbine engine and hydrogen fuel in the hydrogen fuel tank. The secondary fluid may comprise engine oil or coolant.

Alternatively or in addition, the tank heating system may comprise a gas turbine engine core compressor air driven heater configured to exchange heat between gas turbine engine core compressor air and hydrogen fuel in the hydrogen fuel tank.

The gas turbine engine core compressor air driven heater may comprise an intercooler heat exchanger provided in heat exchange relationship between core air flow at an intermediate compressor stage of the gas turbine engine core compressor and hydrogen fuel in the hydrogen fuel tank.

Alternatively or in addition, the core compressor air driven heater may comprise a bleed-air heat exchanger provided in heat exchange relationship between core air bled from a compressor stage of the gas turbine engine core compressor and hydrogen fuel in the hydrogen fuel tank.

The core compressor air driven heater may comprise an auxiliary combustor configured to combust air bled from the main gas turbine engine core compressor and hydrogen fuel in the fuel tank.

The tank heating system may comprise an electric heater in addition to a primary heater comprising one of an engine secondary fluid heat-exchanger, a recuperator, an electric heater, a gas turbine engine compressor bleed-air powered heater, and an auxiliary combustor. Advantageously, a primary heater can be utilised to provide efficient heating of the hydrogen within the tank, with an electric heater providing additional heating where necessary.

The maximum pressure limit may be between 100 and 350 Bar.

The minimum pressure required for operation of the gas turbine engine at a maximum power may be between 2 Bar and 100 Bar.

The tank may be configured to store gaseous hydrogen at a minimum temperature below 200 Kelvin (K), and may be configured to store gaseous hydrogen at a minimum temperature below 150 Kelvin (K), and may be configured to store gaseous hydrogen at a minimum temperature below 100 Kelvin (K), and may be configured to store gaseous hydrogen at a minimum temperature below 90 Kelvin (K).

The tank may be configured to store hydrogen at a temperature above 25K, and may be configured to store hydrogen at a temperature above 33 K.

According to a second aspect of the invention there is provided an aircraft propulsion system comprising the fuel system in accordance with the first aspect.

According to a third aspect of the invention there is provided an aircraft comprising a propulsion system in accordance with the second aspect.

In a fourth aspect there is provided a method of operating a fuel system for an aircraft propulsion system comprising:
storing compressed gaseous hydrogen in a storage tank, the gaseous hydrogen storage tank being fluidly coupled to a combustor of a gas turbine engine; and
controlling a tank heating system to maintain the temperature of hydrogen within the hydrogen tank such that a pressure within the tank during operation is maintained between a maximum pressure limit, and a minimum pressure required for operation of the gas turbine engine at a maximum power without a requirement for further pumping.

### BRIEF DESCRIPTION OF THE DRAWINGS

Embodiments will now be described by way of example only with reference to the accompanying drawings, which are purely schematic and not to scale, and in which:
Figure 1 shows a hydrogen-fuelled airliner comprising hydrogen-fuelled turbofan engines;
Figure 2 is a block diagram of one of the engines of Figure 1;
Figure 3 is a block diagram of a first alternative fuel system for one of the engines of figure 1; and
Figure 4 is a block diagram of a second alternative fuel system for one of the engines of figure 1.

### DETAILED DESCRIPTION

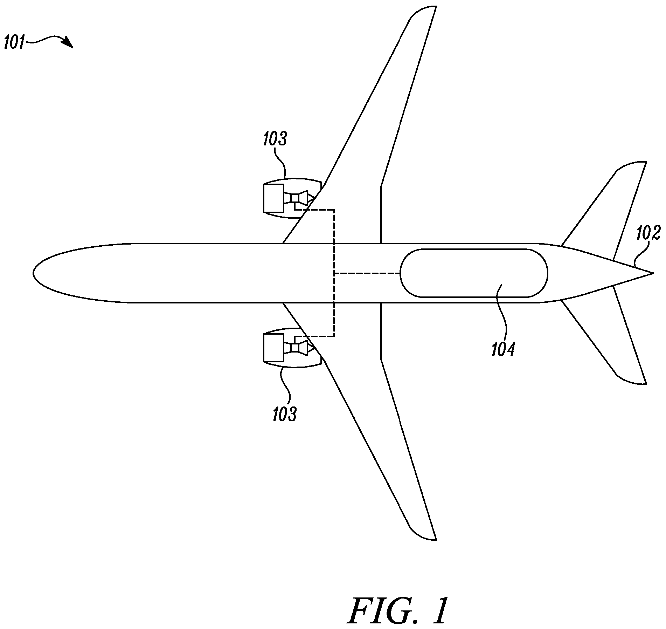

A hydrogen-fuelled airliner is illustrated in Figure 1. In this example, the airliner 101 is of substantially conventional tube-and-wing twinjet configuration with a central fuselage 102 and substantially identical underwing-mounted turbofan engines 103.

A hydrogen storage tank 104 is located in the fuselage 102, though this may be located in other parts of the aircraft. The hydrogen storage tank 104 is a compressed cryogenic hydrogen storage tank and thus stores the hydrogen fuel in a compressed, gaseous or supercritical state. In order to ensure a high density of fuel within the tank, with a relatively low overall system weight (i.e. the weight of the tank and insulation and the fuel contained within the tank), the tank is configured to store hydrogen at below ambient temperatures, and above ambient pressure. In this example, the hydrogen fuel is pressurised to a maximum pressure from around 100 bar to around 350 bar (approximately 10 to 35 megapascals), in a specific example 200 bar. Similarly, the fuel is typically stored at a temperature of below 270 Kelvin (K), and may be stored at a temperature below 200 K, below 150 K, below 100 K, and in the present embodiment is stored at an initial temperature of approximately 80 K. As will be appreciated, both the temperature and pressure of fuel within the tank 104 will vary during operation, and these figures represent a maximum storage pressure, and a minimum storage temperature for which the tank is certified.

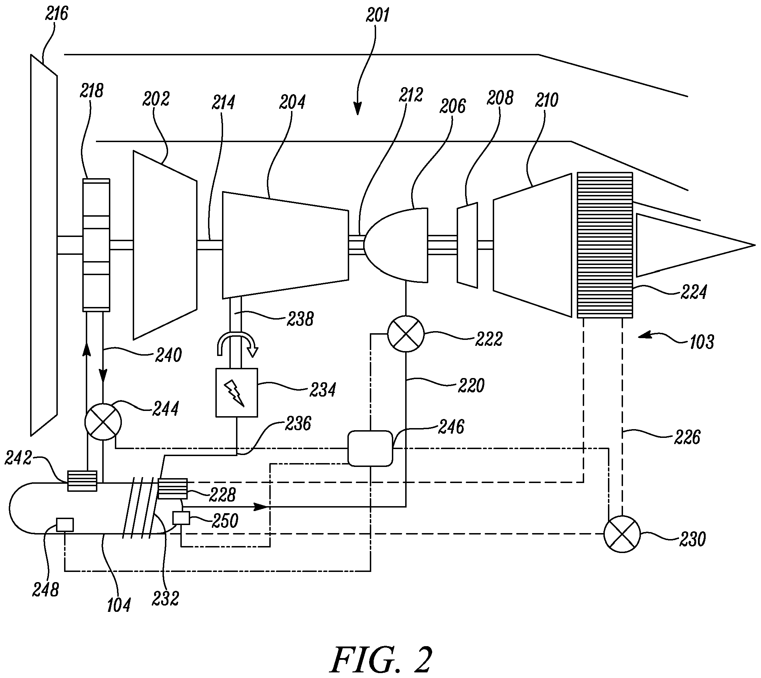

A block diagram of a fuel system 205 including one of the turbofan engines 103 and the fuel tank 104 is shown in Figure 2.

The turbofan engine 103 comprises a core gas turbine 201.

The core gas turbine 201 comprises, in fluid flow series, a low-pressure compressor 202, a high-pressure compressor 204, a combustor 206, a high-pressure turbine 208, and a low-pressure turbine 210. The high-pressure compressor 204 is driven by the high-pressure turbine 208 via a first shaft 212, and the low-pressure compressor 202 is driven by the low-pressure turbine 210 via a second shaft 214. It will be appreciated that in alternative embodiments, the core gas turbine could be of three-shaft configuration.

In operation, the low-pressure turbine 209 drives a fan 216 via sha reduction gearbox 218 in the form of an epicyclic gearbox.

In operation, hydrogen fuel is provided from the hydrogen storage tank 104 from a tank outlet 203 by a via a main fuel conduit 220 which ultimately delivers fuel to the combustor 206. The maximum pressure in the fuel system is provided at the tank outlet 203, since components downstream will reduce fuel system total pressure, and no active pumps are provided in the system. A fuel control valve in the form of a throttle valve 222 is provided downstream in hydrogen fuel flow of the tank 104, and upstream of the combustor 206 to control fuel mass flow rate and pressure delivered to the combustor 206.

In operation, fuel flows from the tank 104 to the combustor 206 via the valve 222, driven by a pressure gradient that exists between the high-pressure environment in the tank 104, and the relatively lower pressure environment in the combustor 206. However, as the tank 104 drains in operation, the pressure and temperature within the tank naturally falls. This is due to the fixed volume of the tank, and the reduced mass of fuel in the tank 104 as it drains.

On the other hand, the minimum fuel pressure at the combustor 206 must exceed the compressor delivery pressure (P30) at the inlet to the combustor 206 at the environmental conditions experienced at that stage in flight. While this pressure P30 may vary in operation, any aircraft gas turbine engine must be capable of providing maximum take-off / go-around thrust at any point when the aircraft is in flight. As will be appreciated, this will vary for a given engine, particularly with altitude. This requirement is particularly difficult to meet when the tank 104 will naturally be at its lowest pressure at the end of a flight, where the tank is relatively empty, while the aircraft is at a low altitude, and thus a high absolute ambient pressure, and may be required to execute a go-around. As such, a large mass of fuel stored within the tank 104 may be unavailable, which leads to an increased operating empty weight and reduced total fuel load, and so a reduced range.

In one example, engine 201 is configured to provide a maximum overall pressure ratio (OPR) of approximately 40:1, though OPRs between 10:1 and 50:1, or even higher, are known. As such, at sea level, the compressor outlet pressure P30 will be approximately 40 bar in this example. At maximum cruising altitude and low thrust, P30 may fall as low as 2 bar in this same engine.

In the present disclosure, this problem is overcome by a hydrogen tank heating system configured to increase the temperature of hydrogen fuel within the tank 104, and consequently, control the pressure within the tank 104.

In the present embodiment, the hydrogen tank heating system comprises a recuperator heat exchanger 224. The recuperator heat exchanger is configured to exchange heat between engine exhaust gases downstream in core gas flow of the turbines 208, 210, with hydrogen fuel in the tank 104. In the present embodiment, the recuperator 224 is configured to exchange heat between the gas turbine engine core flow and a secondary heat exchange fluid provided within a heat exchange fluid conduit 226. A further heat exchanger 228 exchanges heat between the secondary heat exchange fluid and hydrogen in the tank 104. A valve 230 controls flow through the heat exchange fluid conduit 226. As such, heat is provided from the core exhaust to the hydrogen in the tank 104, either directly or via a secondary heat exchange fluid. The flow of fluid, and so the amount of heat exchange, is controlled by the valve 230.

However, the exhaust heat from the engine core 201 may be insufficient to maintain the hydrogen temperature at the required level. Excessive use of engine exhaust heat to heat the hydrogen risks overcooling the exhaust (which risks icing), or underheating the fuel (which risks the fuel tank 104 having insufficient pressure to drive the flow). Additionally, a delay will be experienced between increasing the flow rate via the valve 230 and increasing the temperature in the tank, which may result in the pressure in the tank transiently falling to unacceptably low pressures.

Further engine heat is available from waste heat sources generated by the engine, such as secondary engine fluids. In the present embodiment, waste heat generated by the oil system is used to heat hydrogen in the fuel tank 104. As noted above, the engine 103 includes a reduction gearbox 218, which rejects heat to the oil system. An oil line 240 is provided, which extends from a gearbox oil sump to a heat exchanger 242, which places oil within the oil line 240 in thermal contact with hydrogen in the fuel tank 104. Again, a valve 244 controls flow through the oil line 240, to control heat input to the second heat exchanger 242, and so to the hydrogen in the fuel tank 104. Again, an intermediate heat exchange fluid may be provided between the oil and the hydrogen in a separate heat exchange loop. Further secondary engine fluids include cooled cooling air or liquid coolants used to cooling equipment such as avionics could be used in addition or alternative to engine oil.

It has been found however, that insufficient heat is typically available from the oil system to adequately heat the compressed hydrogen in some cases.

Consequently, an electrical heater in the form of an electric coil heater 232 is provided, either as an alternative to, or in addition to, the recuperator 224. The coil heater is electrically coupled to a generator 234 via an interconnector 236. The generator 234 is in turn mechanically driven via an offtake shaft 238, which is provided by one of the gas turbine engine core shafts 212, 214. Consequently, additional heat can be provided to the tank 104 when necessary, independently of engine heat generation.

A heating controller 246 is provided, which controls each of the valves 230, 244 and electric coil heater 232, to control heat input to the hydrogen tank 104. The controller 246 may be an independent controller, or may be part of a further controller such as an engine electronic controller (FADEC) or part of other aircraft avionics.

The controller 246 is configured to heat the hydrogen in the fuel tank 104, such that a pressure within the fuel tank is maintained between a predetermined minimum and maximum value at all times during flight operations, i.e. between at least take-off and landing.

The maximum pressure is determined by the maximum certified pressure, above which the tank 104 cannot be safely operated. This pressure will vary in accordance with design details of each tank, such as the material used. However, for a given tank, a fixed design certified pressure will be defined.

For example, in the present embodiment, the tank 104 is a filament wound carbon fibre composite tank comprising carbon fibre impregnated with resin wound to form the tank volume. Such a design is suitable for use with hydrogen at low temperatures and is typically capable of a maximum certified pressure of up to 350 bar. Higher pressures may be possible, but would typically result in excessively heavy tanks, which would reduce the hydrogen that can be stored for a given weight.

Other suitable tank materials might include stainless steel, aluminium alloys, carbon composites, copper-lined tanks, polymer lined tanks, compound designs (using one or more of the previous construction techniques and materials), etc.

**The** minimum pressure on the other hand is defined by a minimum pressure required such that hydrogen can be delivered at a necessary flow rate and pressure for anticipated engine and flight conditions. **In** particular, during flight operations, the engines must always be capable of generating full power at sea level, i.e. maximum take-off / go-around power, except in emergencies. At such conditions, compressor delivery pressure (P30) will be at its maximum. As such, the pressure within the combustor 206 will also be at its maximum, which will oppose flow into the combustor 206. Consequently, the controller 246 controls the heat flow into the tank 104, such that the pressure is maintained at at least the P30 value experienced at maximum take-off power for the engine 103 at sea level. Again, maximum certified take-off power will vary between engine types, but a given aircraft engine for which the fuel system is certified will have an associated maximum take-off power, and an associated P30 at this maximum power.

In practice, a margin above P30 at the tank outlet is required, to ensure that pressure losses within the fuel conduit 220, throttle valve 222, and injectors are accounted for, and the mass flow rate required for maximum take-off thrust can be achieved. Again, this margin will be engine dependent, but can be determined from modelling or experimentation for a particular engine. In one example, a factor of 2 times the P30 absolute pressure at the tank outlet may be required to drive the necessary flow rate. In other examples, the margin may be a factor of 1.75. In other examples, the margin may be a factor of 1.6, 1.5, 1.2 or less.

In one example, the pressure within the tank 104 may be allowed to fluctuate during operation, since the required P30 to operate at maximum thrust conditions may fluctuate during operation. For example, as the aircraft climbs to higher altitudes, pressure within the tank may be permitted to fall. During descent, temperatures are increased to increase pressure to allow for maximum thrust at the lower altitude. However, in each case, maximum thrust can be achieved for the given flight phase.

The controller 246 may operate in accordance with known control methodologies. For example, the controller 246 may utilise closed loop control, with a pressure sensor 248 being provided within the hydrogen tank 104, and configured to provide pressure data to the controller 246. Heat input is then controlled, for example in accordance with a Proportional, Integral, Derivative (PID) control scheme, to maintain the pressure within the tank between the minimum and maximum values. In other cases, open loop or model-based control may be used. For example, the system may calculate mass flow losses from the tank 104, such as by a mass flow rate sensor (not shown), or by integrating throttle position over time, and determine tank temperature, either from sensors within the tank, or other modelling methods. From tank temperature, volume and remaining mass, pressure can be calculated, and the controller 246 can control heat input accordingly.

Additional considerations may also be taken into account by the controller 246 in providing heat to the tank 104. For example, minimum and maximum hydrogen temperatures may constrain heat input. As will be understood, as hydrogen is withdrawn from the tank, and pressure reduces, temperature will fall. The temperature will typically fall further when the hydrogen is throttled by the valve 222 as it is fed into the combustor 206 if the temperature is below the Joules Thompson inversion temperature of the hydrogen gas (typically 193K). At such low temperatures, icing risks occur, and combustion instability within the combustor 206 may also present an issue. As such, the controller 246 could be operated to maintain the temperature within the tank 104 above a predetermined minimum temperature (such as 80 Kelvin for example). A temperature sensor 250 may be provided in thermal communication with hydrogen in the tank 104, and in signal communication with the controller 246, which may control heating to maintain the temperature to within the minimum and maximum limits in accordance with open, closed or model-based control, as described above.

Similarly, a maximum hydrogen temperature may be defined. For example, a maximum temperature may be necessary to reduce thermal cycling of the tank 104, or to prevent damage to tank materials in the event that the hydrogen reaches excessive temperatures. In one example, a maximum temperature of 320 K is used, which is the temperature limit of the resin in used in the tank 104 material. Where higher temperature capable tank materials are used, the maximum permitted hydrogen temperature may be higher, to permit greater extraction of remaining hydrogen gas.

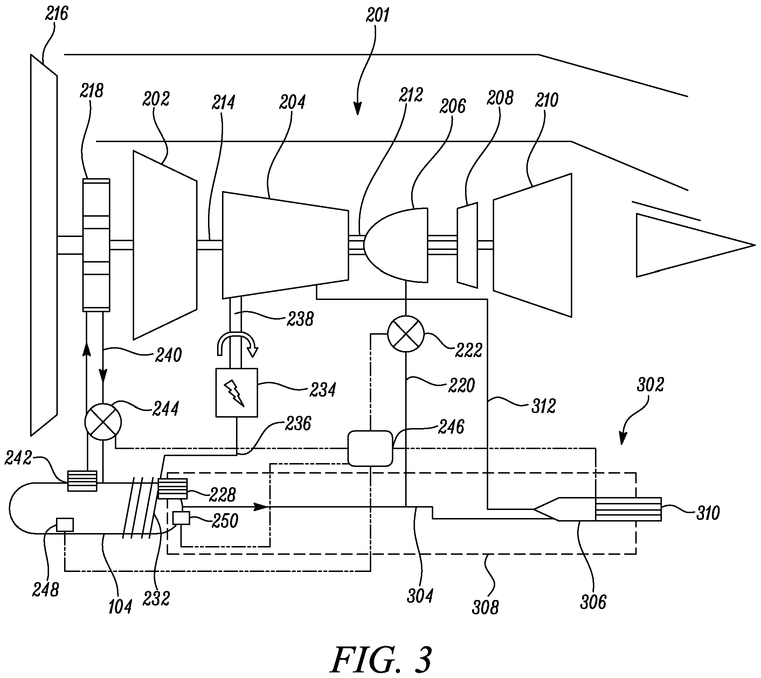

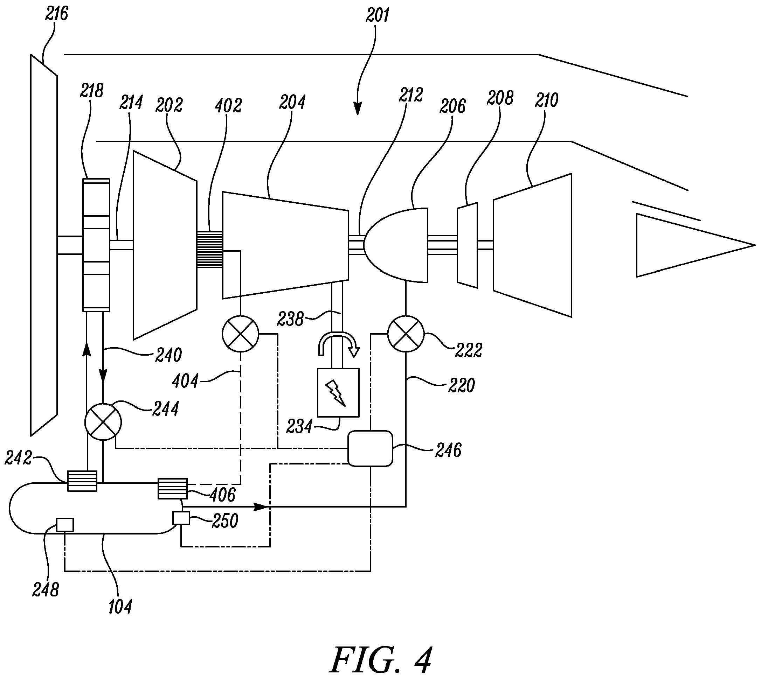

Alternative heat inputs can be provided to the tank 104, either in addition to or to replace any of the recuperator 224, oil heater 242 or electric coil heater 232, as shown in the embodiments in figures 3 and 4.

As shown in figure 3, an auxiliary heater 302 is provided for heating of the hydrogen fuel within tank 104. The oil heater 242 and electric coil heater 232 are also provided in this embodiment, but the recuperator is omitted.

The auxiliary heater 302 comprises an offtake 304 to divert a portion of the hydrogen fuel from the main fuel conduit 220. The amount of hydrogen bled from the main fuel conduit 220 is controlled by a valve (not shown).

The auxiliary heater 302 heats the hydrogen fuel in the main fuel conduit 220 by combustion of the bled fuel in a burner 306 located in heat exchange relationship with an intermediate heat exchange fluid in a loop 308 via a heat exchanger 310 in thermal communication with burner 306 exhaust, and a further heat exchanger 314 in thermal communication with hydrogen int the tank 104. As will be understood, fuel for the burner 306 must also be provided at an acceptable temperature, and a smaller auxiliary fuel heater (not shown) may be provided for this.

In order to reduce the volume of the burner 306, it is desirable to use a high-pressure source of air, which provides sufficient mass-flow in a small volume to combust the hydrogen fuel. As such, air for combustion with the bled hydrogen fuel is bled from a compressor of the gas turbine engine core, and in this embodiment, from the high-pressure compressor 204. Air is bled from the high-pressure compressor 204 from a compressor bleed 312 via one or more valves (not shown). Alternatively, air may be bled from the low-pressure compressor 202.

The auxiliary heater 302 can be operated in accordance with two modes of operation, in addition to a non-operational mode.

In a first mode, the bleed air line 312 is operated, to bleed high-pressure, high-temperature air from the compressor 204. This air flows through the burner 306, and into the heat exchanger 310, where it either exchanges heat directly with hydrogen which is then returned to the tank 104 to heat the hydrogen tank contents, or with the intermediate heat exchange fluid. In either case, the relatively warm compressor air may be sufficient to heat the hydrogen in the tank 104, without combustion.

In a second mode, both the bleed air line 312 and hydrogen offtake 304 are operated, and the burner 306 is activated, to combust hydrogen and oxygen, to increase the inlet temperature of gases in the heat exchanger 310. As such, greater heat is available to heat hydrogen in the tank 104.

In either case, the auxiliary heater 302 is operated by the controller 246, in a manner similar to the first embodiment.

A further embodiment of the fuel system is shown in figure 4. In this embodiment, the heaters comprise the oil heater 242 and an intercooler heat exchanger system, with the electric heater 232, recuperator 224 and auxiliary heater 302 being omitted.

The system is similar to the embodiments shown in figures 2 and 3, with only differences therebetween being described.

The intercooler heat exchange system comprises a first intercooler heat exchanger 402 located within the core flow between compressor stages of the gas turbine engine core 201. In the present embodiment, the first intercooler heat exchanger 402 is provided between the low and high-pressure compressor 202, 204, though it will be understood that in principle, the first intercooler heat exchanger 402 could be located between any two compressor stages. **The** first intercooler heat exchanger 402 is configured to pass heated and compressed compressor air and cool it using either hydrogen from the hydrogen tank 104, or an intermediate heat exchange fluid, as in the present embodiment. Where an intermediate heat exchange fluid is used, a second intercooler heat exchanger is provided in thermal communication between the intermediate heat exchange fluid and hydrogen in the hydrogen fuel tank 104. As such, hydrogen within the fuel tank 104 is heated, and compressor air is cooled by operation of the heat exchangers 402, 406. Again, a valve 408 controlled by the controller 246 is provided to control flow of the intermediate heat exchange fluid or hydrogen, to control heat input to the hydrogen in the tank 104.

As will be understood, aspects of the first, second and third embodiments can be combined. For example, an embodiment in which a recuperator, oil heater, electric heater, compressor bleed air heater, intercooler heat exchange system and auxiliary burner are provided, or any combination of one or more of these heaters, can be envisaged.

The controller 246 can be operated in accordance with a control scheme which seeks to minimise impacts of the hydrogen heating on the operation of the gas turbine engine, or minimise overall thrust specific fuel (SFC) consumption.

As will be appreciated, the various heaters (oil heater 242, electric heater 232, bleed air / burner 302, intercooler 402, 406 and recuperator 224) have different impacts on the gas turbine engine cycle. Accordingly, for a given heat input requirement, the controller 246 may select a heater or combination of heaters which provides the required heat input while minimising overall fuel consumption.

Typically, the heater with the minimum impact on SFC will be the oil heater 242. As such, the controller 246 may operate the valve 244 to prioritise heat from the oil heater 242 over other sources. However, it is important not to over-cool the oil, and so a temperature sensor (not shown) may be provided within the oil line 240 to prevent overcooling.

Where heating from the oil heater 242 is insufficient, a further heating source will be selected which has a minimal impact on SFC and engine operation. For example, recuperator flow has relatively little impact on engine SFC, typically only slightly reducing core thrust. As such, the controller 246 is configured to operate the valve 230 to provide heat input from the recuperator in preference to other heat sources, after the oil heater 242.

The electric coil heater 232, and auxiliary heater 302 will have the highest impact on engine SFC and engine operability of the various heaters. Which of these has the highest impact will depend on operational considerations, and specifics of the engine, but can be modelled by the controller 246.

For example, higher heating load from the electric heater 232 will require work to be extracted from the high-pressure shaft 212, in view of the higher load on the generator 234. This will in turn reduce shaft power available to power the compressor 204, which may negatively impact compressor pressure ratio, and thus thermodynamic efficiency of the engine. As such, increased electrical load increase SFC.

On the other hand, extracting bleed air also reduces thermodynamic efficiency, in view of the work extracted from the compressor, much of which will be expelled overboard in the auxiliary heater exhaust. As such, operation of the heater in the first mode enacts an efficiency penalty on the engine. Similarly, operation in the second mode requires fuel to be extracted from the offtake 304, which increases overall propulsion system fuel burn.

Which of these heaters provides the least impact on operability and overall fuel consumption will depend on engine design, as well as operation. For example, bleed air extraction at low engine power may be desirable, in view of the compressor operating closer to the stall margin under these conditions. As such, bleed extraction can reduce the need for operating handling bleeds, and so improve engine fuel consumption, or at least impact it to a lesser extent than extracting work from the compressor in the form of shaft load.

As such, the controller 246 operates the heaters to provide heating from the heater which has the minimal overall fuel consumption, taking into account engine operability constraints.

In one example, the controller 246 is configured to extract heat from the oil heater 242 in preference to all other heaters, then, when insufficient heat is available, extract heat from the recuperator 224 or intercooler 402 (where present). When insufficient heat is available from these sources, at low engine power, the controller 246 is configured to extract bleed air from the compressor 204 via the burner 306 operating in accordance with the first mode, then, when this is insufficient, extract heat from the heating coil 232 and / or activate fuel flow from the offtake 304 to operate the auxiliary heater in the second mode of operation. At higher engine operating speeds, the controller 246 is configured to operate the coil heater 232 in preference to the auxiliary heater in either the first or second operating modes.

Modifications to the disclosure could be envisaged without departing from the scope of the claims. For example, the engine could comprise a turboprop, a direct drive architecture, or have different numbers of spools.

The secondary heat exchange fluid could be omitted, with the hydrogen itself being the heat exchange fluid. For example, the recuperator, oil heater and burner could directly exchange heat with hydrogen in the tank via respective heat exchangers.

Various examples have been described, each of which comprise various combinations of features. It will be appreciated by those skilled in the art that, except where clearly mutually exclusive, any of the features may be employed separately or in combination with any other features and thus the disclosed subject-matter extends to and includes all such combinations and sub-combinations of the or more features described herein.

## Claims

1. A fuel system (205) for an aircraft propulsion system (103) comprising:
a fuel tank (104) configured to store compressed gaseous hydrogen;
a tank heating system (224, 232, 234, 242, 302, 406) configured to raise the temperature of hydrogen fuel within the hydrogen tank (104);
a main fuel conduit (220) configured to provide hydrogen fuel from the tank (104) to a combustor (206) of a gas turbine engine (201) of the aircraft propulsion system (103); and
a controller (246) configured to control the tank heating system (224, 232, 234, 242, 302, 406); wherein
the controller (246) is configured to heat the hydrogen within the hydrogen tank (104) such that a pressure within the tank (104) during operation is maintained between a maximum pressure limit, and a minimum pressure required for operation of the gas turbine engine (201) at a maximum power without a requirement for a fuel pump.

2. A fuel system according to claim 1, wherein the fuel system is configured such that, in use, a maximum fuel pressure within the fuel system is provided at an outlet of the fuel tank (104).

3. A fuel system according to claim 1 or claim 2, wherein the controller (246) is configured to control the pressure within the tank (104) such that an outlet pressure of the tank (104) is greater than a maximum compressor delivery pressure (P30) of the gas turbine engine (201) at maximum take-off thrust.

4. A fuel system according to any of the preceding claims, wherein the controller (246) is configured to control the pressure within the tank (104) such that an outlet pressure of the tank (104) is a factor of at least 1.2 times the maximum compressor delivery pressure (P30), and preferably a factor of at least 1.6 times the maximum compressor delivery pressure (P30), and more preferably a factor of at least 1.7 times the maximum compressor delivery pressure (P30), and still more preferably a factor of 1.75 times the maximum compressor delivery pressure (P30).

5. A fuel system according to claim 4, wherein the controller (246) is configured to control the pressure within the tank (104) such that an outlet pressure of the tank (104) is a factor of less than 2 times the maximum compressor delivery pressure (P30).

6. A fuel system according to any of the preceding claims, wherein the fuel system comprises a throttle valve (222) configured to control pressure in the main fuel conduit (220) downstream in hydrogen fuel flow of the main hydrogen tank (104), and upstream of the combustor (206) of the gas turbine engine (201).

7. A fuel system according to any of the preceding claims, wherein the tank heating system comprises one or more of a gas turbine engine secondary fluid heat-exchanger (242), a recuperator (224), an electric heater (232) and a compressor bleed-air powered heater (302).

8. A fuel system according to claim 7, wherein the fuel system comprises a secondary heat exchange fluid configured to exchange heat between the recuperator (224) and hydrogen fuel in the fuel tank (104).

9. A fuel system according to claim 7 or claim 8, wherein the secondary
fluid may comprise engine oil or coolant.

10. A fuel system according to any of claims 7 to 9, wherein the gas turbine
engine core compressor air driven heater comprises an intercooler heat exchanger (402) provided in heat exchange relationship between core air flow at an intermediate compressor stage of the gas turbine engine core compressor (202, 204) and hydrogen fuel in the hydrogen fuel tank (104).

11. A fuel system according to any of claims 7 to 10, wherein the core
compressor air driven heater comprise a bleed-air heat exchanger (310) provided in heat exchange relationship between core air bled from a compressor stage of the gas turbine engine core compressor (202, 204) and hydrogen fuel in the hydrogen fuel tank (104), and wherein the core compressor air driven heater may comprise an auxiliary combustor (306) configured to combust air bled from the main gas turbine engine core compressor (202, 204) and hydrogen fuel in the fuel tank (104).

12. A fuel system according to any of claims 7 to 11, wherein the tank
heating system comprises an auxiliary electric heater (232) in addition to a primary heater comprising one of an engine secondary fluid heat-exchanger (242), a recuperator (224) and a gas turbine engine compressor bleed-air powered heater (310, 306, 402).

13. A fuel system according to any of the preceding claims, wherein the
maximum pressure limit is between 100 and 350 Bar, and wherein the minimum pressure required for operation of the gas turbine engine (201) at a maximum power may be between 2 Bar and 100 Bar.

14. A fuel system according to any of the preceding claims, wherein the
tank (104) is configured to store gaseous hydrogen at a minimum temperature below 200 Kelvin (K), and may be configured to store gaseous hydrogen at a minimum temperature below 150 Kelvin (K), and may be configured to store gaseous hydrogen at a minimum temperature below 100 Kelvin (K), and may be configured to store gaseous hydrogen at a minimum temperature below 90 Kelvin (K), and wherein the tank (104) may be configured to store hydrogen at a temperature above 25K.

15. A method of operating a fuel system (205) for an aircraft propulsion
system (103) comprising:
storing compressed gaseous hydrogen in a storage tank (104), the gaseous hydrogen storage tank being fluidly coupled to a combustor (206) of a gas turbine engine (201); and
controlling a tank heating system to maintain the temperature of hydrogen within the hydrogen tank (104) such that a pressure within the tank (104) during operation is maintained between a maximum pressure limit, and a minimum pressure required for operation of the gas turbine engine at a maximum power without a requirement for further pumping.
